# EUROPÄISCHE PATENTSCHRIFT

(11) **EP 4 014 711 B1**
(45) Veröffentlichungstag und Bekanntmachung des Hinweises auf die Patenterteilung: **07.01.2026**
(21) Anmeldenummer: 21199792.9
(22) Anmeldetag: 29.09.2021
(51) Int. Cl.: A01D 41/127, A01B 79/00, G01N 21/00

(54) **VERFAHREN ZUR KOMBINATION VON AT-LINE-MESSDATEN UND ON-LINE-NIR-MESSDATEN ZUR ANALYSE VON ERNTEGUT**
METHOD FOR COMBINING AT-LINE-MEASUREMENT DATA AND ON-LINE NIR MEASUREMENT DATA FOR THE ANALYSIS OF CROPS
PROCÉDÉ DE COMBINAISON DES DONNÉES DE MESURE AT-LINE ET DES DONNÉES DE MESURE NIR ON-LINE DESTINÉ À L'ANALYSE DU PRODUIT DE LA RÉCOLTE

(30) Priorität: 17.12.2020 DE 102020134034
(43) Veröffentlichungstag der Anmeldung: 22.06.2022
(73) Patentinhaber: CLAAS Selbstfahrende Erntemaschinen GmbH, 33428 Harsewinkel (DE)
(72) Erfinder: MARBACH, Ralf, 33775 Versmold (DE); MIDDELBERG, René, 49080 Osnabrück (DE); FISCHER, Frédéric, 59759 Arnsberg (DE); NALBACH, Marc, 33102 Paderborn (DE); WITTE, Johann, 58730 Fröndenberg (DE)
(74) Vertreter: CLAAS Gruppe

(56) Entgegenhaltungen:
- EP-B1- 3 366 104
- DE-C1- 10 236 515
- US-A1- 2004 063 478
- US-A1- 2009 286 582
- US-B1- 6 360 179

## Beschreibung

Die Erfindung betrifft ein Verfahren zur Kombination von at-line Messdaten und on-line NIR-Messdaten zur Analyse von Erntegut gemäß Anspruch 1 sowie eine landwirtschaftliche Erntemaschine eingerichtet zur Verwendung in einem solchen Verfahren gemäß Anspruch 11.

Die chemische Analyse von Erntegut ist in der Landwirtschaft schon länger relevant. Bei diesem Erntegut kann es sich zum Beispiel um Mais und Gras handeln, das von einem Feldhäcksler zur Silierung geerntet wird. Weiterhin kann es sich um Getreidekörner, Hülsenfrüchte und Ölfrüchtekörner handeln, die von einem Mähdrescher geerntet werden. Chemisch analysiert werden dabei im Wesentlichen Inhaltsstoffe, primär die Feuchte, die typisch in Prozent der Gesamtmasse angegeben wird. Relevant sind jedoch auch andere Inhaltsstoffe, wie Proteine und Zucker, die typisch in Prozent der Trockenmasse angegeben werden und abstraktere Merkmale wie beispielsweise die Verdaulichkeit für Nutztiere.

Vorliegend steht die Kombination einer zeitlich entkoppelten, sogenannten "at-line" Analyse mit einer on-line Messung im Vordergrund. Bei der at-line Analyse handelt es sich um Messungen, die in relativ großen Zeitabständen durchgeführt werden, um Mittelwertkonzentrationen eines Loses Erntegut, also einer großen, definierten Menge Erntegut, zu bestimmen. Der Zeitabstand zwischen verschiedenen Messungen ist dabei prozessabhängig und kann von wenigen Sekunden bis hin zu mehreren Tagen reichen. Die Grundlage für die at-line Analyse ist das Sammeln einer geeigneten Laborprobe, die die chemischen Eigenschaften der gesamten in Frage stehenden Erntegutmenge gut widerspiegelt. At-line Analysen sind z.B. aus US 6 360 179 B1 bekannt.

Von on-line Messungen unterscheidet sich die at-line Analyse durch die zeitliche Entkopplung. Insbesondere messen on-line Sensoren typischerweise mit äquidistanten Zeitabständen direkt am laufenden Gutstrom.

Interessant ist hier auch die Entnahme einer Laborprobe aus einem Los Erntegut mittels einer landwirtschaftlichen Erntemaschine. Diese Laborprobe soll vorgegebene Anforderungen an die Repräsentativität erfüllen und zeitlich entkoppelt gemessen werden können. Sie wird also aus einem Erntegutstrom einer landwirtschaftlichen Erntemaschine entnommen und von diesem entkoppelt. Eine Zurückführung in den Erntegutstrom nach der Analyse steht dem allerdings nicht entgegen.

On-line Messungen auf landwirtschaftlichen Erntemaschinen sind grundsätzlich bekannt. Auch Labormessungen werden regelmäßig am Erntegut vorgenommen. Diese beiden Arten der Messung werden bisher jedoch nicht technisch miteinander verknüpft. On-line Messungen sind z.B. aus US 2009/286582 A1 bekannt.

Der Erfindung liegt das Problem zugrunde, ein Verfahren zur Kombination von at-line Messdaten und on-line NIR-Messdaten zur Analyse von Erntegut anzugeben, bei dem die Ergebnisse der jeweiligen Messung tatsächlich miteinander verknüpft werden können.

Das obige Problem wird bei einem Verfahren gemäß dem Oberbegriff von Anspruch 1 durch die Merkmale des kennzeichnenden Teils von Anspruch 1 gelöst.

Wesentlich ist die Erkenntnis, eine landwirtschaftliche Erntemaschine mit einer automatischen Probenentnahmevorrichtung zur Entnahme von Laborproben auszustatten, die Laborprobe at-line zu analysieren und die so gewonnenen at-line Messdaten zur Analyse der NIR-Messdaten zu verwenden.

Im Einzelnen wird ein Verfahren zur Kombination von at-line Messdaten und on-line NIR-Messdaten zur Analyse von Erntegut vorgeschlagen, wobei eine landwirtschaftliche Erntemaschine mit mindestens einem Arbeitsaggregat zum Aufnehmen eines abgeernteten Feldbestandes als Erntegut und/oder zur Verarbeitung des Ernteguts vorgesehen ist, wobei das Erntegut im Betrieb der landwirtschaftlichen Erntemaschine in einem Erntegutstrom entlang eines Ernteguttransportweges durch die landwirtschaftlichen Erntemaschine transportiert wird, wobei die landwirtschaftliche Erntemaschine eine an dem Ernteguttransportweg angeordnete NIR-Messvorrichtung zum Messen der NIR-Messdaten des Ernteguts aufweist, wobei die landwirtschaftliche Erntemaschine eine an dem Ernteguttransportweg angeordnete automatische Probenentnahmevorrichtung zur Entnahme von Laborproben aus dem Erntegutstrom aufweist und mit der Probenentnahmevorrichtung eine Laborprobe entnimmt, wobei eine at-line

Analysevorrichtung vorgesehen ist, wobei die Laborprobe at-line durch Messen der at-line Messdaten mittels der at-line Analysevorrichtung analysiert wird und wobei die at-line Messdaten und die on-line NIR-Messdaten in einer Verknüpfungsroutine zur Analyse der NIR-Messdaten miteinander verknüpft werden.

Die Erfindung basiert auch darauf, dass NIR-Messvorrichtungen insbesondere bei Anwendung auf einen Erntegutstrom und somit auf einer landwirtschaftlichen Erntemaschine keine perfekte Genauigkeit aufweisen. Üblicherweise kann nur die Oberfläche des Ernteguts analysiert werden, womit die Analyse von Inhaltsstoffen erschwert wird. Außerdem ist eine vollständige Kalibration der NIR-Messvorrichtung aufwändig, sodass hier noch viel Potential besteht. Weiterhin kann die Kalibration abhängig von äußeren Umständen wie dem Wetter und inneren Eigenschaften des Ernteguts eine variierende Qualität aufweisen. Neben dem Ermöglichen einer besseren Kalibration erlaubt das vorschlagsgemäße Verfahren in einer anderen Variante auch die Nachkorrektur von NIR-Messdaten. Dabei ist sogar möglich, eine Laborprobe von nur einem Los Erntegut eines Erntevorgangs zu nehmen, diese den zugehörigen NIR-Messdaten zuzuordnen und damit NIR-Messdaten des gesamten Erntevorgangs oder sogar mehrerer Erntevorgängen zu korrigieren.

Die Erfindung betrifft auch Aspekte des Sammelns der Laborprobe und insbesondere eine bevorzugte Probenentnahmevorrichtung, die das Entnehmen einer Laborprobe ermöglicht, die ein bestimmtes Maß an Repräsentativität aufweist und entsprechend ein Los Erntegut gut abbildet. Je repräsentativer die Laborprobe ist, desto besser ist auch die Verwendbarkeit zur Analyse der NIR-Messdaten.

Bei einer Ausgestaltung gemäß Anspruch 2 betreffen die NIR-Messdaten und die at-line Messdaten das selbe Los Erntegut. Dies ermöglicht es insbesondere, die gemessenen NIR-Messdaten zu korrigieren und insbesondere deren Mittelwert mit einem Offset zu beaufschlagen.

Zur Durchführung eines Teils des Verfahrens kann eine Steuereinheit vorgesehen sein, die einen lokalen Teil aufweisen kann, der Teil der landwirtschaftlichen Erntemaschine ist und/oder einen externen Teil, der extern zu der landwirtschaftlichen Erntemaschine vorgesehen ist. Diese Steuereinheit gemäß Anspruch 3 ist somit die bevorzugte Art der Datenverarbeitung bei dem vorschlagsgemäßen Verfahren. Die Möglichkeit mittels der Messdaten einen Kalibrationsdatensatz zu erzeugen, ist

Gegenstand von Anspruch 4. Damit wird eine deutlich kostengünstigere und effektivere Kalibration von NIR-Messvorrichtungen ermöglicht. Es wird damit auch ermöglicht, für die Kalibration deutlich mehr Datensätze zu erzeugen, wodurch die Qualität des Kalibrationsdatensatzes erhöht werden kann. Dabei können gemäß Anspruch 5 auch unterschiedliche landwirtschaftliche Erntemaschinen zum Einsatz kommen.

Alternativ oder zusätzlich kann bei einer Ausgestaltung gemäß Anspruch 6 vorgesehen sein, dass die NIR-Messvorrichtung mit einem Kalibrationsdatensatz betrieben wird, der vorzugsweise mittels der at-line Messdaten korrigiert wird. Diese Korrektur muss dabei nicht zwingend in den Kalibrationsdatensatz eingebracht werden. Anspruch 7 betrifft die Möglichkeit, Korrekturwerte abhängig von spezifischen Bedingungen zu ermitteln, die gemäß den Ansprüchen 7 und 8 dann auch auf anderen landwirtschaftlichen Erntemaschinen unter ähnlichen Bedingungen zum Einsatz kommen können.

Anspruch 9 betrifft die Möglichkeit, mittels der NIR-Messvorrichtung NIR-Messdaten zu mehreren Losen Erntegut zu messen und diese mittels einer Laborprobe zu mindestens einem der Lose zu korrigieren. Somit kann die erhöhte Genauigkeit einer Laboranalyse auch auf Messungen übertragen werden, zu denen keine Laboranalyse vorliegt.

Es kann gemäß Anspruch 10 vorgesehen sein, dass die at-line Analysevorrichtung Teil der landwirtschaftlichen Erntemaschine ist. Sie kann jedoch auch extern zu der landwirtschaftlichen Erntemaschine angeordnet sein. Ersteres ermöglicht dabei eine schnellere Analyse der Laborprobe, während letzteres die Nutzung sensiblerer Messgeräte erlaubt.

Nach einer weiteren Lehre, der eigenständige Bedeutung zukommt, wird eine landwirtschaftliche Erntemaschine, eingerichtet zur Verwendung in einem vorschlagsgemäßen Verfahren, gemäß Anspruch 11 beansprucht. Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Erntemaschine zur Verwendung in dem vorschlagsgemäßen Verfahren,
- Fig. 2: schematisch die Teilung eines Loses Erntegut bis hin zur Laborprobe,
- Fig. 3: zwei mögliche Ausgestaltungen der Probenentnahmevorrichtung und
- Fig. 4: das vorschlagsgemäße Verfahren in abstrahierter Darstellung.

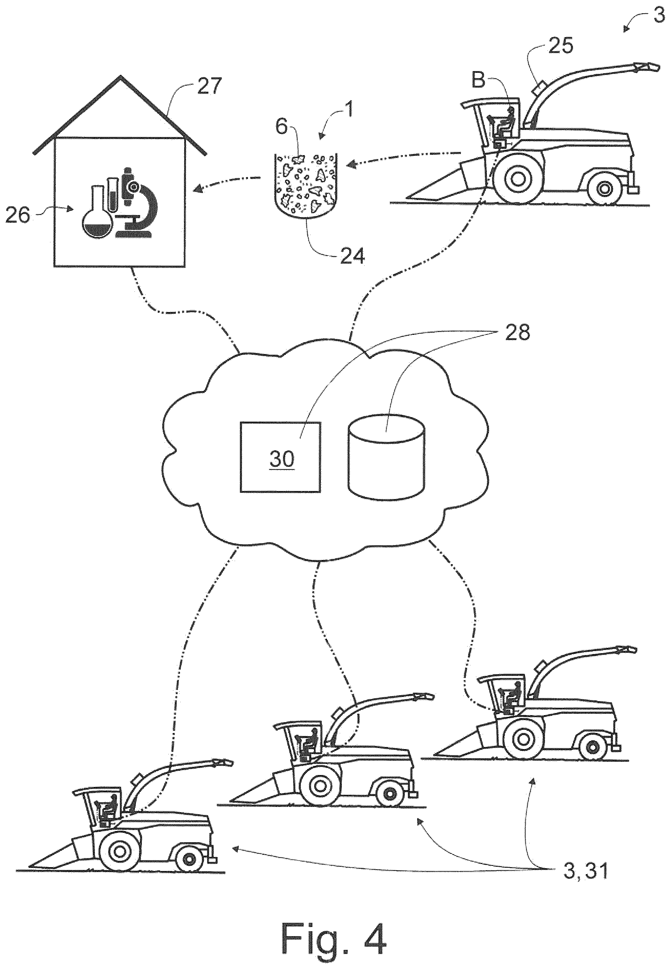

Fig. 4 verdeutlicht das vorschlagsgemäße Verfahren zur Kombination von at-line Messdaten und on-line NIR-Messdaten zur Analyse von Erntegut 6 schematisch. Der Begriff "at-line" bedeutet vorzugsweise, dass die Messdaten zeitlich entkoppelt zum Betrieb der landwirtschaftlichen Erntemaschine 3 gemessen werden. Weiter vorzugsweise werden die Messdaten auch räumlich entkoppelt von der landwirtschaftlichen Erntemaschine 3, also außerhalb der landwirtschaftlichen Erntemaschine 3, gemessen. Diese bevorzugte, sowohl zeitlich als auch räumlich entkoppelte Messung wird als off-line Messung bezeichnet. Vorzugsweise umfasst die zeitliche Entkopplung ein Sammeln von Erntegut 6 zum Bilden der Laborprobe 1. Das Sammeln kann im einfachsten Fall durch ein Anstauen des Ernteguts 6 geschehen, vorzugsweise ist jedoch zum Sammeln ein eigener Behälter vorgesehen, wie noch erläutert wird.

Das Verfahren wird mittels einer landwirtschaftlichen Erntemaschine 3 mit mindestens einem Arbeitsaggregat 4 zum Aufnehmen eines abgeernteten Feldbestandes 5 als Erntegut 6 und/oder zur Verarbeitung des Ernteguts 6 durchgeführt.

Das Erntegut 6 wird im Betrieb der landwirtschaftlichen Erntemaschine 3 in einem Erntegutstrom 7 entlang eines Ernteguttransportweges 8 durch die landwirtschaftliche Erntemaschine 3 transportiert.

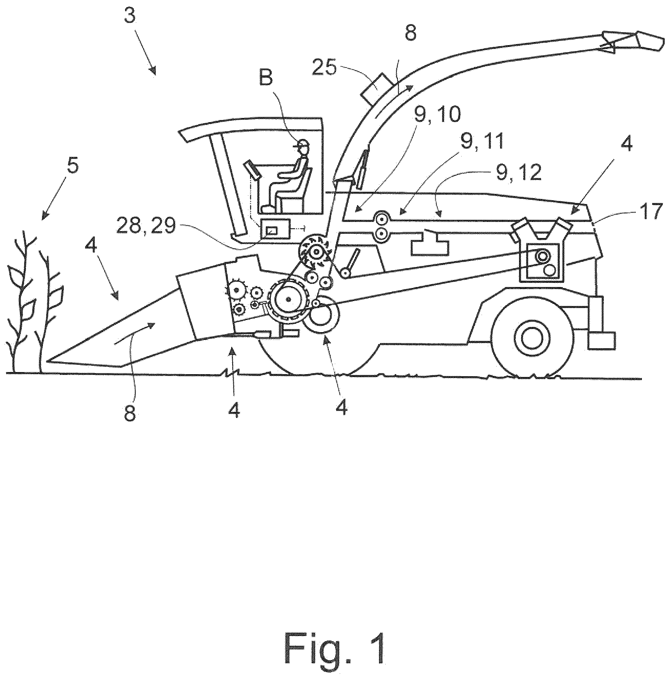

Wie in Fig. 1 verdeutlicht, weist die landwirtschaftliche Erntemaschine 3 eine an dem Ernteguttransportweg 8 angeordnete NIR-Messvorrichtung 25 durch Messen der NIR-Messdaten des Ernteguts 6 auf. Diese NIR-Messvorrichtung 25 kann beispielsweise eine Lichtquelle aufweisen, die das Erntegut 6 bestrahlt, wodurch die NIR-Messvorrichtung 25 das Spektrum der diffusen Reflektionen messen kann. Derartige NIR-Messvorrichtungen 25 sind im landwirtschaftlichen Bereich bekannt.

Weiterhin weist die landwirtschaftliche Erntemaschine 3 eine an dem Ernteguttransportweg 8 angeordnete automatische Probenentnahmevorrichtung 9 zur Entnahme von Laborproben 1 aus dem Erntegutstrom 7 auf und entnimmt mit der Probenentnahmevorrichtung 9 eine Laborprobe 1. Diese Probenentnahmevorrichtung 9 wird im Folgenden noch in ihrer bevorzugten Ausgestaltung ausführlich beschrieben.

Weiterhin ist eine at-line Analysevorrichtung 26 vorgesehen, wobei die Laborprobe 1 at-line durch Messen der at-line Messdaten mittels der at-line Analysevorrichtung 26 analysiert wird und wobei die at-line Messdaten und die on-line NIR-Messdaten in einer Verknüpfungsroutine zur Analyse der NIR-Messdaten miteinander verknüpft werden. Diese Verknüpfung in der Verknüpfungsroutine kann wie im einleitenden Teil der Beschreibung bereits erläutert insbesondere zur Kalibration oder zur Korrektur der NIR-Messdaten dienen.

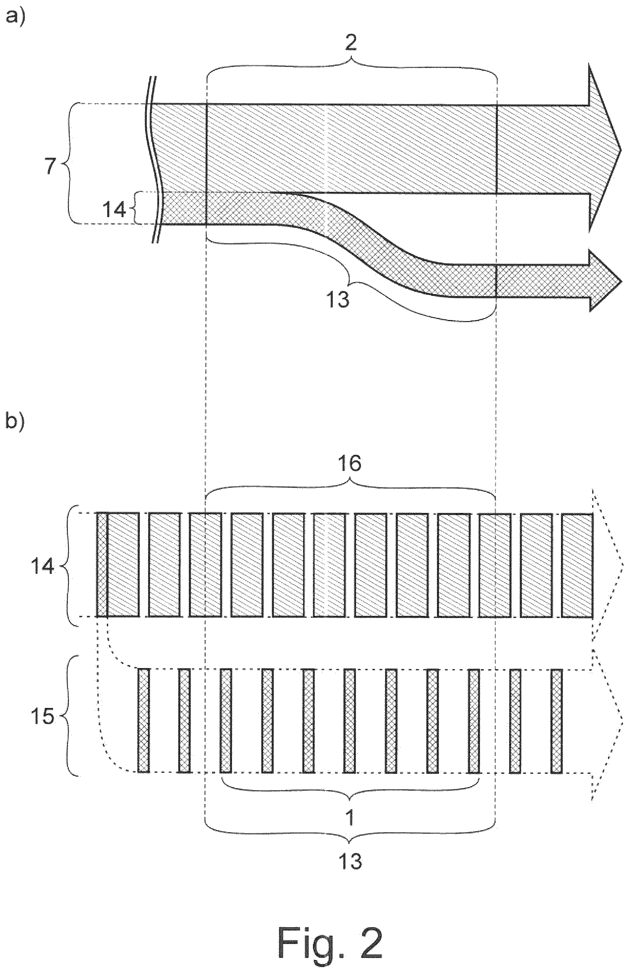

Das in Rede stehende Verfahren umfasst das Sammeln einer Laborprobe 1. Das Sammeln einer Laborprobe 1 aus einem Los Erntegut 2 ist schematisch in Fig. 2 abgebildet. Das Verfahren wird beispielhaft an dem in Fig. 1 dargestellten Feldhäcksler als landwirtschaftliche Erntemaschine 3 erläutert. Dies ist jedoch nicht beschränkend zu verstehen. Als weitere bevorzugte landwirtschaftliche Erntemaschine 3 kommen für die Durchführung des Verfahrens Mähdrescher, Ladewagen und Ballenpressen sowie Mähwerke, Wender und Schwader in Frage.

Das Erntegut 6 besteht vorliegend vorzugsweise aus Mais, Gras, Getreidekörnern, Hülsenfrüchten, Ölfrüchtekörnern, Heu oder Stroh. Auch diese Aufzählung ist jedoch nicht beschränkend zu verstehen. Weiter bevorzugt ist dabei die Kombination eines Feldhäckslers als landwirtschaftliche Erntemaschine 3 mit Mais oder Gras als Erntegut 6 oder die Kombination eines Mähdreschers als landwirtschaftliche Erntemaschine 3 mit Getreidekörnern oder Hülsenfrüchten oder Ölfrüchtekörnern als Erntegut 6 oder einem Ladewagen als landwirtschaftliche Erntemaschine 3 mit Gras oder Stroh als Erntegut 6 oder einer Ballenpresse als landwirtschaftliche Erntemaschine 3 mit Stroh als Erntegut 6.

Das Los Erntegut 2 entspricht einem Zeitabschnitt des Erntegutstroms 7. Dabei ist es hier und vorzugsweise so, dass ein Los Erntegut 2 deutlich mehr Erntegut 6 umfasst, als sich zu einem beliebigen Zeitpunkt gleichzeitig in der landwirtschaftlichen Erntemaschine 3 befindet. Sofern die landwirtschaftliche Erntemaschine 3 einen Sammelbehälter für das Erntegut 6 umfasst, wie beispielsweise bei einem Ladewagen der Fall, kann das Los Erntegut 2 auch über die Füllung dieses Sammelbehälters definiert sein. Daraus ergibt sich, dass bei einer normalen Feldbearbeitung üblicherweise mehrere Lose Erntegut 2 anfallen. Entsprechend kann das Sammeln einer Laborprobe 1 während einer Feldbearbeitung mehrfach am Stück oder zeitlich beabstandet durchgeführt werden. Genauso kann aber auch vorgesehen sein, pro Feldbearbeitung nur eine Laborprobe 1 zu nehmen. Beispielhafte Größen für die Laborprobe 1 und das Los Erntegut 2 werden im Folgenden noch genannt.

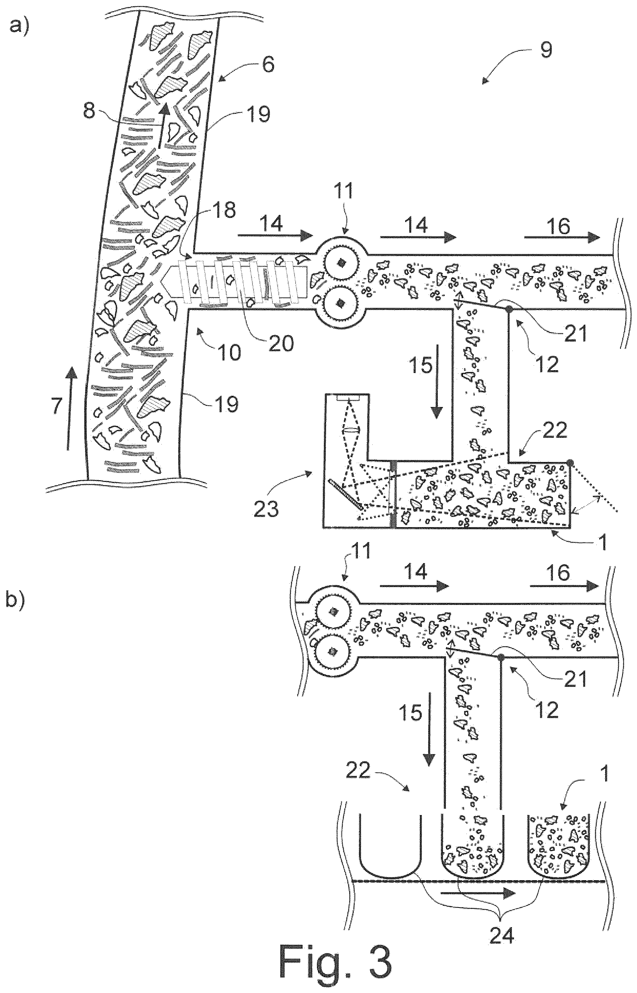

Die Probenentnahmevorrichtung 9 weist hier und vorzugsweise eine am Ernteguttransportweg 8 angeordnete Grob-Teilungsvorrichtung 10, eine Zerkleinerungsvorrichtung 11 und eine Fein-Teilungsvorrichtung 12 auf. Diese sind in Fig. 1 und im Detail in Fig. 3 dargestellt.

Grundsätzlich sind in manchen landwirtschaftlichen Erntemaschinen 3 sogenannte "Bypass" Kanäle vorgesehen, durch die nur ein kleiner Teil des Ernteguts 6 transportiert wird, und die ebenfalls Teil des Ernteguttransportweges 8 sind. Vorliegend ist die Grob-Teilungsvorrichtung 10 jedoch vorzugsweise an einem Haupt-Ernteguttransportweg angeordnet, durch den der größte Teil des oder das vollständige Erntegut 6 transportiert wird. Tatsächlich lässt sich auch eine bereits vorgesehen Teilung für einen Bypass grundsätzlich als Grob-Teilungsvorrichtung 10 verwenden.

Denkbar ist dabei auch, dass die Grob-Teilungsvorrichtung 10 aus dem Erntegutstrom 7 des Loses 2 eine Rohprobe 13 entnimmt. Die Grob-Teilungsvorrichtung kann dabei, wie noch erläutert werden wird, grundsätzlich aktiv oder passiv ausgestaltet sein. Im Ausführungsbeispiel ist die Grob-Teilungsvorrichtung 10 aktiv ausgestaltet. Fig. 2a) verdeutlicht schematisch, wie die Grob-Teilungsvorrichtung 10 aus dem Los Erntegut 2 einen Teil als Rohprobe 13 entnimmt. Dabei handelt es sich um einen kleinen Bruchteil des Loses Erntegut 2, wobei exemplarische Werte im Folgenden noch genannt werden.

Möglich ist weiterhin, dass die Zerkleinerungsvorrichtung 11 die Rohprobe 13 zerkleinert. Die Zerkleinerungsvorrichtung 11 kann jegliche Vorrichtung sein, die in der Lage ist, eine Partikelgröße der Rohprobe 13 zu reduzieren. Bevorzugt ist es dabei so, dass die Zerkleinerungsvorrichtung 11 die Rohprobe 13 zu einem Pulver zerkleinert. Auch hier werden bevorzugte Partikelgrößen später noch genannt.

Wie in Fig. 2b) verdeutlicht, ist weiterhin denkbar, dass die Fein-Teilungsvorrichtung 12 aus der zerkleinerten Rohprobe 13 die Laborprobe 1 zur zeitlich entkoppelten Analyse entnimmt. Wie später am Ausführungsbeispiel der Fein-Teilungsvorrichtung 12 noch verdeutlicht wird, kann die Fein-Teilungsvorrichtung 12 die vollständige zerkleinerte Rohprobe 13 als Laborprobe 1 entnehmen. In einer bevorzugten Ausführungsform ist die Laborprobe 1 jedoch nur ein kleiner Teil der zerkleinerten Rohprobe 13. Es ergibt sich somit, dass insgesamt die Laborprobe 1 nur einem Bruchteil des Loses Erntegut 2 entspricht.

Es ist hier so, dass der Begriff "Labor" sehr weit zu verstehen ist. Es geht dabei grundsätzlich darum, dass bei der Laborprobe 1 keine on-line Analyse des Ernteguts 6 vorgenommen wird. Es ist jedoch durchaus möglich, die Laborprobe 1 an Bord der landwirtschaftlichen Erntemaschine 3 zu analysieren. Dabei ist die zeitliche Entkopplung der Laborprobe 1 von dem Erntegutstrom 7 wesentlich, wodurch die Laborprobe 1 auch ein Los Erntegut 2 abbilden kann, jedoch nicht muss, das deutlich größer ist als die Menge an Erntegut 6, die zu einem beliebigen Zeitpunkt von der landwirtschaftlichen Erntemaschine 3 verarbeitet wird. Auch ist das Verfahren, anders als ein on-line Verfahren, grundsätzlich geeignet, die Laborprobe 1 zu einem beliebigen Zeitpunkt zu analysieren. Eine tatsächliche Möglichkeit, dies zu tun, muss auf der landwirtschaftlichen Erntemaschine 3 nicht vorgesehen sein. Hier und vorzugsweise erfolgt das Sammeln der vollständigen Laborprobe 1 vor einer Analyse der Laborprobe 1.

Wie aus Fig. 1 ersichtlich, ist die Grob-Teilungsvorrichtung hier und vorzugsweise entlang des Ernteguttransportweges 8 angeordnet. Die Fein-Teilungsvorrichtung 12 und vorzugsweise die Zerkleinerungsvorrichtung 11 können jedoch abseits des Ernteguttransportweges 8 angeordnet sein. In einer bevorzugten Ausführungsform sind die Grob-Teilungsvorrichtung 10 und die Zerkleinerungsvorrichtung 11 und die Fein-Teilungsvorrichtung 12 voneinander beabstandet und funktional hintereinander angeordnet.

Wie bereits erwähnt, können während einer Feldbearbeitung vorzugsweise durchgehend Laborproben 1 produziert werden. Im Ausführungsbeispiel ist zusätzlich eine noch zu erläuternde Ein- und Ausschaltbarkeit der Probenentnahmevorrichtung 9 vorgesehen. Im Hinblick darauf und dargestellt anhand der Fig. 2 ist es hier und vorzugsweise so, dass die Grob-Teilungsvorrichtung 10 aus dem Erntegutstrom 7 einen Rohprobenstrom 14 entnimmt und dass die Zerkleinerungsvorrichtung 11 den Rohprobenstrom 14 zerkleinert. Die Rohprobe 13 wird also vorzugsweise nicht am Stück in einem Vorgang als Ganzes entnommen. In Fig. 2a) ist schematisch dargestellt, wie der Rohprobenstrom 14 aus dem Erntegutstrom 7 entnommen wird.

Vorzugsweise entnimmt die Fein-Teilungsvorrichtung 12 aus dem zerkleinerten Rohprobenstrom 14 einen Laborprobenstrom 15, wie schematisch in Fig. 2b) dargestellt. Sowohl der Rohprobenstrom 14 als auch der Laborprobenstrom 15 sind auch in Fig. 3 dargestellt, wobei die jeweils neben dem entsprechenden Strom angeordneten Pfeile mit den entsprechenden Bezugszeichen versehen sind. Wieder im Hinblick auf Fig. 2b) ist es hier und vorzugsweise so, dass die Laborprobe 1 ein Abschnitt des Laborprobenstroms 15 ist.

Es ist hier so, dass alle Ausführungen zu der Rohprobe 13 und der Laborprobe 1 bevorzugt auch jeweils für den Rohprobenstrom 14 und den Laborprobenstrom 15 gelten. Es kann also vorgesehen sein, dass mehrere Laborproben 1 durch Wiederholung des vorschlagsgemäßen Verfahrens und vorzugsweise auf die gleiche Art und Weise entnommen werden. Dennoch steht vorliegend erstmal die Entnahme einer einzelnen Laborprobe 1 im Vordergrund.

Es ist hier besonders bevorzugt so, dass die Grob-Teilungsvorrichtung 10 die Rohprobe 13 kontinuierlich aus dem Erntegutstrom 7 entnimmt und die Fein-Teilungsvorrichtung 11 die Laborprobe 1 kontinuierlich aus der zerkleinerten Rohprobe 13 entnimmt, so dass die Laborprobe 1 ein zusammenhängendes Los 2, insbesondere vollständig, abbildet. Die Laborprobe 1 entsteht also beispielsweise nicht nur aus den mittleren 10% des Loses 2. Damit einher geht die Möglichkeit, dass eine zeitliche Verzögerung zwischen Aufnahme des Ernteguts 6 und Entnahme der Laborprobe 1 im Wesentlichen konstant ist. Somit wird eine Zuordnung der Laborprobe 1 zu einem Abschnitt des Feldbestandes 5 ermöglicht.

Das vollständige Abbilden des Loses Erntegut 2 durch die Laborprobe 1 erfordert ein gewisses Maß an Repräsentativität, wobei die durch die partikuläre Zusammensetzung des Ernteguts 6 entstehende Varianz der chemischen Zusammensetzung der Laborprobe 1 vorzugsweise in der Größenordnung einer Wiederholvarianz einer Messapparatur zur Analyse der Laborprobe 1 oder darunter liegt. Es wird daher durch das erläuterte Verfahren zum Sammeln der Laborprobe 1 ermöglicht, Laborproben 1 an Bord der landwirtschaftlichen Erntemaschine 3 zu entnehmen, die einen sehr kleinen oder möglicherweise sogar gar nicht relevanten Fehler in die Analyse einbringen, obwohl die Laborprobe 1 nur einen geringen Bruchteil des Loses Erntegut 2 ausmacht.

Der Begriff "kontinuierlich" bezieht sich, wie nun erläutert wird, nicht zwingend auf eine durchgängige, zumindest aber auf eine regelmäßige Entnahme.

Es kann vorgesehen sein, dass die Grob-Teilungsvorrichtung 10 die Rohprobe 13 in diskreten, insbesondere äquidistanten, Abschnitten aus dem Erntegutstrom 7 entnimmt. Dafür kann diese beispielsweise regelmäßig ein- und ausgeschaltet werden. Alternativ kann vorgesehen sein, dass die Grob-Teilungsvorrichtung 10 die Rohprobe 13 durchgängig aus dem Erntegutstrom 7 abzweigt. Dies entspricht der in Fig. 2a) dargestellten Variante. Je nach Erntegut 6 kann mit einem Abzweigen eine etwas geringere Repräsentativität einhergehen, die jedoch durch eine mechanisch möglicherweise deutlich einfachere Ausgestaltung der Grob-Teilungsvorrichtung 10 kompensiert wird.

Ein Abzweigen der Rohprobe 13 aus dem Erntegutstrom 7 kann außerdem eine besonders einfache passive Ausgestaltung der Grob-Teilungsvorrichtung 10 ermöglichen. Beispielsweise könnte die Grob-Teilungsvorrichtung 10 lediglich ein Gitter am Rand des Ernteguttransportweges 8 umfassen.

Die in Fig. 3 dargestellte Variante umfasst allerdings eine aktive Grob-Teilungsvorrichtung 10, die noch erläutert wird. Wie dort ebenfalls erkennbar ist, ist es hier und vorzugsweise so, dass die Zerkleinerungsvorrichtung 11 die Rohprobe 13 vollständig zerkleinert. Eine Teilung der Rohprobe 13 vor der Zerkleinerungsvorrichtung 11 findet dann nicht statt.

Bezüglich der Fein-Teilungsvorrichtung 12 ist es vorzugsweise so, dass die Fein-Teilungsvorrichtung 12 die zerkleinerte Rohprobe 13 in eine Restprobe 16 und die Laborprobe 1 teilt. Die Restprobe 16, die insbesondere ein Restprobenstrom sein kann, kann in das Erntegut 6 oder auf das Feld geleitet werden. Die zweite Variante ist in Fig. 1 mittels des Auslasses 17 für die Restprobe 16 angedeutet.

Wie in Fig. 2b) gezeigt, kann es so sein, dass die Fein-Teilungsvorrichtung 12 die Laborprobe 1 in diskreten, insbesondere äquidistanten, Zeitabschnitten aus der Rohprobe 13 entnimmt. Alternativ kann vorgesehen sein, dass die Fein-Teilungsvorrichtung 12 die Laborprobe 1 durchgängig aus der Rohprobe 13 abzweigt. In Fig. 2b) ist die bevorzugte Ausgestaltung dargestellt, dass die Fein-Teilungsvorrichtung 12 jeweils zeitweise einen Teil, insbesondere den gesamten Querschnitt, des zerkleinerten Rohprobenstroms 14 umleitet und so die Laborprobe 1 zusammensetzt.

Im Folgenden werden die bevorzugten Anteile der beiden Teilungen, die zusammen den Anteil der Laborprobe 1 am Los 2 ergeben, näher erläutert.

Hier und vorzugsweise ist ein Gewichtsanteil und/oder Volumenanteil der Rohprobe 13 an dem Los 2 mittels der Grob-Teilungsvorrichtung einstellbar. Dies kann beispielsweise mittels eines Ein- und Ausschaltens oder einer Betriebsgeschwindigkeit der Grob-Teilungsvorrichtung 10 erreicht werden.

Ein Gewichtsanteil und/oder Volumenanteil der Rohprobe 13 an dem Los 2 beträgt vorzugsweise höchstens 1/500, vorzugsweise höchstens 1/1000, weiter vorzugsweise höchstens 1/2000, noch weiter vorzugsweise höchstens 1/5000. In einer besonders bevorzugten Ausführung beträgt der Gewichtsanteil und/oder Volumenanteil etwa 1/10.000. Es ist hier also möglich, mit derselben Grob-Teilungsvorrichtung 10 unterschiedliche Gewichts- und/oder Volumenanteile auf derselben landwirtschaftlichen Erntemaschine 3 zu erzielen. Dabei ist dann vorzugsweise mindestens einer und weiter vorzugsweise sind alle der genannten Werte einstellbar. Weiter gelten die genannten Anteile vorzugsweise für den Anteil des Rohprobenstroms 14 an dem Erntegutstrom 7 entsprechend.

Zusätzlich oder alternativ ist hier und vorzugsweise ein Gewichtsanteil und/oder Volumenanteil der Laborprobe 1 an der Rohprobe 13 mittels der Fein-Teilungsvorrichtung 12 einstellbar. Es gelten die zur Grob-Teilungsvorrichtung 10 gemachten Ausführungen entsprechend.

Der Gewichtsanteil und/oder Volumenanteil der Laborprobe 1 an der Rohprobe 13 kann höchstens 1 betragen. Hier und vorzugsweise ist der Gewichtsanteil und/oder Volumenanteil der Laborprobe 1 an der Rohprobe 13 zumindest kleiner als 1 einstellbar, insbesondere immer kleiner als 1. Weiter vorzugsweise beträgt er höchstens 1/10, noch weiter vorzugsweise höchstens 1/100 und/oder mindestens 1/1000, vorzugsweise mindestens 1/750, weiter vorzugsweise mindestens 1/500. Auch hier gilt, dass bei einer Einstellbarkeit des Gewichts- und/oder Volumenanteils vorzugsweise mindestens einer, weiter vorzugsweise alle der genannten Werte einstellbar sind. Genauso gilt, dass die genannten Werte vorzugsweise auch für den Laborprobenstrom 15 gelten.

Der Erntegutstrom 7 liegt hier und vorzugsweise in einer Größenordnung von mehreren Tonnen pro Stunde, vorzugsweise von 20 t bis 300 t pro Stunde oder darüber. Die Losgröße des Los Erntegut 2 beträgt hier und vorzugsweise mindestens eine halbe Tonne, weiter vorzugsweise mindestens 1 t, noch weiter vorzugsweise mindestens 5 t und noch weiter vorzugsweise mindestens 15 t oder mindestens 20 t. Es ergeben sich damit Losdauern von wenigen Minuten bis hin zu etwa einer Stunde. Der Rohprobenstrom 14 liegt dann beispielhaft in einer Größenordnung von einigen Kilogramm pro Stunde. Die Laborprobe 1 beträgt hier und vorzugsweise mindestens 1 g, weiter vorzugsweise mindestens 2,5 g, noch weiter vorzugsweise mindestens 5 g und/oder höchstens 1 kg, vorzugsweise höchstens 750 g, noch weiter vorzugsweise höchstens 100 g. Beispielhaft kann die Laborprobe 1 zumindest im Bereich 5 g bis 500 g einstellbar sein.

Vorzugsweise zerkleinert die Zerkleinerungsvorrichtung 11 Partikel der Rohprobe 13 bezogen auf deren mittlere Größe und/oder deren mittleres Gewicht um einen Faktor von mindestens 10, vorzugsweise mindestens 25, weiter vorzugsweise mindestens 50, noch weiter vorzugsweise etwa 100. Die Teilchen des Ernteguts 6 können je nach Art des Ernteguts 6 beispielhaft zwischen wenigen hundertstel Gramm und einigen Gramm wiegen. Die Partikel der zerkleinerten Rohprobe 13 weisen vorzugsweise ein mittleres Gewicht von höchstens 100 mg, vorzugsweise höchstens 50 mg, weiter vorzugsweise höchstens 20 mg auf. Sofern hier von der Größe eines Partikels die Rede ist, bezieht diese sich immer auf den längsten Durchmesser eines Partikels.

Die Laborprobe 1 weist hier und vorzugsweise zwischen 500 zerkleinerten Partikeln und 1.000.000 zerkleinerten Partikeln auf. Vorzugsweise weist sie mindestens 1000 und/oder höchstens 100.000 zerkleinerte Partikel auf.

Im Folgenden wird nun anhand von Fig. 3 die bevorzugte mechanische Ausführungsform der Zerkleinerungsvorrichtung 11, der Grob-Teilungsvorrichtung 10 und der Fein-Teilungsvorrichtung 12 erläutert.

Die Grob-Teilungsvorrichtung 10 kann eine Öffnung 18 in einer dem Ernteguttransportweg 8 begrenzenden Wand 19 aufweisen. Zusätzlich oder alternativ kann die Grob-Teilungsvorrichtung 10 eine in den Ernteguttransportweg 8 ragende Schneckenschraube 20 aufweisen. Es ist entsprechend ersichtlich, wie damit das Teilungsverhältnis durch eine Drehgeschwindigkeit der Schneckenschraube 20 oder auch ein Ein- und Ausschalten variiert werden kann. Auch kann so die gesamte Probenentnahmevorrichtung 9 abgeschaltet werden. In einer alternativen Ausgestaltung, die hier nicht dargestellt ist, ist die Schneckenschraube quer, insbesondere orthogonal, zum Ernteguttransportweg 8 angeordnet und ragt mit einer Längsseite in den Erntegutstrom 6.

In einer Ausführungsform, die insbesondere für Ballenpressen und/oder bei Stroh als Erntegut 6 interessant ist, jedoch auch bei anderen landwirtschaftlichen Erntemaschinen 3 und Erntegütern 6 verwendet werden kann, kann die Grob-Teilungsvorrichtung 10 eine Vor-Zerkleinerungsvorrichtung aufweisen, die hier nicht dargestellt ist und die einen Teil des Erntegutstroms 7 des Loses 2 gleichzeitig entnimmt und zerkleinert. Diese Vor-Zerkleinerungsvorrichtung kann auch durch die Zerkleinerungsvorrichtung 11 gebildet werden.

Die Öffnung 18 ist hier und vorzugsweise länglich quer zur Fließrichtung des Erntegutstroms 7 ausgerichtet, so dass ein breiter Teil des Erntegutstroms 7 entnommen werden kann. Gegenüber einer entlang des Erntegutstroms 7 ausgerichteten Öffnung 18 kann so eine höhere Repräsentativität erreicht werden.

Die Zerkleinerungsvorrichtung 11 kann eine Mühle, vorzugsweise eine Scheibenmühle, oder ein Schneidwerk, vorzugsweise ein Messerschneidwerk, aufweisen.

Wie ebenfalls in Fig. 3 dargestellt, kann die Fein-Teilungsvorrichtung 12 eine bewegliche Klappe 21 aufweisen, die ansteuerbar einen Teil der Rohprobe 13 umleitet und so als Laborprobe 1 entnimmt. Vorzugsweise ist es dabei so, dass die bewegliche Klappe 21 in den diskreten Zeitabschnitten jeweils einen vollständigen Querschnitt der Rohprobe 13 umleitet. Genauso ist jedoch denkbar, dass mittels der beweglichen Klappe 21 ein Anteil eines durchgängigen Abzweigens der Laborprobe 1 von der Rohprobe 13 einstellbar ist.

Weiterhin im Hinblick auf Fig. 3 kann vorgesehen sein, dass die Probenentnahmevorrichtung 9 eine Sammelvorrichtung 22 für die Laborprobe 1 aufweist. Dafür sind in Fig. 3 zwei Varianten dargestellt. In Fig. 3a) weist die Sammelvorrichtung 22 lediglich ein entleerbares Gefäß auf, an dem eine lokale Analysevorrichtung 23 angeordnet ist. Unabhängig von der Ausgestaltung der Sammelvorrichtung 22 handelt es sich bei dieser lokalen Analysevorrichtung 23 hier und vorzugsweise um eine NIR-basierte Analysevorrichtung 23, insbesondere ein NIR-Spektroskop. Damit kann eine Analyse der Laborprobe 1 direkt auf der landwirtschaftlichen Erntemaschine 3 durchgeführt werden.

Wie in Fig. 3b) dargestellt, kann auch vorgesehen sein, dass die Sammelvorrichtung 22 ein, insbesondere verschließbares, Behältnis 24 aufweist, in dem die Sammelvorrichtung 22 die Laborprobe 1 sammelt. Weiter bevorzugt ist dann, dass das Behältnis 24 von der landwirtschaftlichen Erntemaschine 3 an einen Benutzer B ausgegeben wird. Alternativ ist jedoch auch möglich, dass der Benutzer B das Behältnis 24 ausleert und dieses nicht entnimmt.

Darauf aufbauend ist es hier und vorzugsweise so, dass die Laborprobe 1 von einer Analysevorrichtung 25 außerhalb der landwirtschaftlichen Erntemaschine 3, vorzugsweise in einem Labor 27, analysiert wird. Es kann dabei vorgesehen sein, dass dem Benutzer B eine Laborprobe 1 ausgegeben wird, es können jedoch auch mehrere Laborproben 1 in Behältnissen 24 gesammelt und dem Benutzer B ausgegeben werden.

Die Analyse im Labor 27 oder soweit durchführbar auf der landwirtschaftlichen Erntemaschine 3 kann eine Spektroskopie, eine NMR-Analyse, ein nass-chemisches Verfahren oder dergleichen umfassen. Hier und vorzugsweise wird die Feuchte der Laborprobe 1 und/oder Inhaltsstoffe der Laborprobe 1, vorzugsweise ein Proteingehalt und/oder ein Zuckergehalt und/oder abgeleitete Größen, vorzugsweise eine Verdaulichkeit für Nutztiere, analysiert und ermittelt.

Interessant ist, dass sowohl die lokale Analysevorrichtung 23 als auch die NIR-Messvorrichtung 25 auf der Nahinfrarotspektroskopie beruhen können. Tatsächlich können beide identisch sein oder bei entsprechendem Vorsehen von beispielsweise einem teildurchlässigen Spiegel und Verschlüssen kann sogar ein- und dieselbe NIR-Messvorrichtung 25 verwendet werden. Dennoch entsteht ein deutlicher Gewinn an Messdaten, da die lokale Analysevorrichtung 23 eine zerkleinerte und repräsentative Laborprobe 1 betrachtet und somit deutlich besser Inhaltsstoffe messen kann, als eine NIR-Messvorrichtung 25, die nur oberflächlich den Erntegutstrom 7 misst.

Trotz einer möglicherweise geringen Varianz zwischen Losen Erntegut 2 einer einzelnen Feldbearbeitung kann es vorteilhaft sein, wenn die NIR-Messvorrichtung 25 on-line NIR-Messdaten des Loses 2 sammelt. In der Verknüpfungsroutine können dann die NIR-Messdaten und die at-line Messdaten des Loses 2 miteinander verknüpft werden. So passen die at-line Messdaten genau zu den NIR-Messdaten. Wenn die zeitliche Verzögerung zwischen der Entnahme der Rohprobe 13 und dem Messen mittels der NIR-Messvorrichtung 25 bekannt ist, kann eine sehr genaue Zuordnung der Messdaten zueinander erfolgen.

In Fig. 1 ist die NIR-Messvorrichtung 25 entlang des Ernteguttransportwegs 8 hinter der Probenentnahmevorrichtung 9 angeordnet. Die umgekehrte Anordnung ist jedoch genauso möglich, da die Probenentnahmevorrichtung 9 vorzugsweise keinen nennenswerten Einfluss auf den Erntegutstrom 7 hat.

Es ist vorzugsweise so, dass die NIR-Messvorrichtung 25 mehrere NIR-Messdaten eines Loses Ernteguts 2 misst. Die NIR-Messvorrichtung 25 kann beispielsweise sekündlich oder alle paar Millisekunden einen Messwert aufnehmen. Die NIR-Messdaten können gemittelt und in der Verknüpfungsroutine mit den at-line-Messdaten verknüpft werden. So wird es insbesondere ermöglicht, eine Offset-Korrektur für die NIR-Messvorrichtung 25 zu ermitteln.

Grundsätzlich kann vorliegend eine Steuereinheit 28 vorgesehen sein. Diese Steuereinheit 28 kann eine lokale Steuereinheit 29 aufweisen, die Teil der landwirtschaftlichen Erntemaschine 3 ist und/oder eine externe Steuereinheit 30, die extern zu der landwirtschaftlichen Erntemaschine 3, insbesondere cloudbasiert, vorgesehen ist. Beide Möglichkeiten sind in den Figuren dargestellt. Vorzugsweise ist es dabei, wie in Fig. 4 visualisiert, so, dass die NIR-Messdaten von der lokalen Steuereinheit 29 an die externe Steuereinheit 30 gesendet werden, dass die at-line Messdaten von der at-line Analysevorrichtung 26 an die externe Steuereinheit 30 gesendet werden und dass die externe Steuereinheit 30 die Verknüpfungsroutine durchführt. Diese externe Steuereinheit 30 kann beispielsweise Teil eines landwirtschaftlichen Managementsystems sein. Es kann dann also der Fall sein, dass korrigierte NIR-Messdaten erst nach einiger Zeit zur Verfügung stehen. Dies reicht jedoch üblicherweise aus, um mit den Ergebnissen entsprechend zu planen.

Da mit dem vorschlagsgemäßen Verfahren nun NIR-Messdaten und at-line Messdaten zur Verfügung stehen, die vorzugsweise dasselbe Los Erntegut 2 betreffen, wird die Kalibration von NIR-Messvorrichtungen 25 für die Zukunft deutlich vereinfacht. Es ist entsprechend vorzugsweise so, dass in der Verknüpfungsroutine die at-line Messdaten und die NIR-Messdaten zu einem Kalibrationsdatensatz verknüpft werden, mit dem eine NIR-Messvorrichtung 25 zur Ermittlung von Inhaltsstoffen von Erntegut 6 betreibbar ist.

Ganz allgemein ist es dabei vorzugsweise so, dass Messdaten gesammelt werden, dass aus den Messdaten eine Rechenvorschrift ermittelt wird, die eine Beziehung zwischen Roh-Messdaten der NIR-Messvorrichtung und Inhaltsstoffen o.Ä. abbildet und dass diese Rechenvorschrift Eingang in den Kalibrationsdatensatz findet. Die Ermittlung der Rechenvorschrift kann dabei auf einem Computer oder dergleichen erfolgen.

Vorzugsweise werden at-line Messdaten und NIR- Messdaten von mindestens 10, weiter vorzugsweise mindestens 50, noch weiter vorzugsweise mindestens 100 Losen 2 zu dem Kalibrationsdatensatz verknüpft. So wird eine entsprechend hohe Genauigkeit der Kalibrationsdaten des Kalibrationsdatensatzes erreicht.

Das vorschlagsgemäße Verfahren muss nicht nur auf einer einzigen landwirtschaftlichen Erntemaschine 3 durchgeführt werden. Es ist hier sogar bevorzugt so, dass mehrere landwirtschaftliche Erntemaschinen 31 vorgesehen sind und dass at-line Messdaten und NIR-Messdaten von mindestens zwei, vorzugsweise von mindestens 5, weiter vorzugsweise von mindestens 20 landwirtschaftlichen Erntemaschinen 3, 31 zu dem Kalibrationsdatensatz verknüpft werden.

Prinzipiell kann vorgesehen sein, dass die NIR-Messvorrichtung 25 mit einem Kalibrationsdatensatz zur Ermittlung von Inhaltsstoffen von Erntegut 6 des Loses 2 betrieben wird. Dies kann ein auf vorschlagsgemäße Art und Weise ermittelter Kalibrationsdatensatz sein, jedoch auch ein herkömmlicher Kalibrationsdatensatz. So oder so können in der Verknüpfungsroutine die von der NIR-Messvorrichtung 25 ermittelten Inhaltsstoffe des Loses 2 mit den at-line Messdaten verglichen werden, wobei vorzugsweise ein Korrekturwert ermittelt wird, mit dem die von der NIR-Messvorrichtung 25 ermittelten Inhaltsstoffe verrechnet werden können, um die Genauigkeit der Ermittlung der Inhaltsstoffe zu erhöhen. Dieser Korrekturwert kann anschließend cloudbasiert verwendet und/oder der NIR-Messvorrichtung 25 zugeführt und bei zukünftigen Messungen verwendet werden. Es kann aber auch sein, dass mittels des Vergleichs beispielsweise eine Qualitätssicherung oder ähnliches durchgeführt wird, ohne dass ein Korrekturwert ermittelt wird.

Der Korrekturwert kann abhängig von spezifischen Bedingungen, insbesondere dem Wetter oder einem Ort, insbesondere einem Feld, und/oder einer Fruchtart und/oder einer Jahreszeit ermittelt werden. Insbesondere ist es vorzugsweise so, dass verschiedene Korrekturwerte für unterschiedliche Bedingungen ermittelt werden. Der Korrekturwert kann dann bei ähnlichen spezifischen Bedingungen auf der landwirtschaftlichen Erntemaschine 3 und/oder anderen landwirtschaftlichen Erntemaschinen 31 zur, insbesondere online, Korrektur von NIR-Messdaten verwendet werden. So wird es beispielsweise möglich, nur eine landwirtschaftliche Erntemaschine 3 einer Flotte mit einer Probenentnahmevorrichtung 9 auszustatten und trotzdem die Messgenauigkeit für die gesamte Flotte zu erhöhen. Bearbeitet die Flotte beispielsweise dasselbe Feld, ist davon auszugehen, dass ein Korrekturwert der einen landwirtschaftlichen Erntemaschine 3 auch bei den anderen landwirtschaftlichen Erntemaschinen 31 die Messergebnisse verbessert.

Entsprechend ist es hier und vorzugsweise so, dass der Korrekturwert bei NIR-Messvorrichtungen 25 anderer landwirtschaftlicher Erntemaschinen 31 zur, insbesondere on-line, Korrektur von NIR-Messdaten verwendet wird und vorzugsweise, dass die anderen landwirtschaftlichen Erntemaschinen 31 in örtlicher Nähe zu der landwirtschaftlichen Erntemaschine 3 verwendet werden.

Da Labormessungen tendenziell teuer und aufwändig sind, kann vorgesehen sein, dass die NIR-Messvorrichtung 25 NIR-Messdaten mehrerer Lose Erntegut 2, vorzugsweise eines Erntevorgangs, misst und dass die Probenentnahmevorrichtung 9 eine Laborprobe 1 zu mindestens einem der Lose 2 entnimmt, die von der at-line Analysevorrichtung 26 analysiert wird. Sodann kann in der Verknüpfungsroutine aus den NIR-Messdaten und den at-line Messdaten mindestens eines der Lose 2 ein Korrekturwert ermittelt werden, wobei die at-line Analysevorrichtung 26 zu mindestens einem der Lose 2 keine Laborprobe 1 analysiert. Die NIR-Messdaten zu dem Los 2 ohne analysierte Laborprobe 1 können dann mittels des Korrekturwerts korrigiert werden. Diese Korrektur findet vorzugsweise nachträglich in der Cloud statt. Es kann also ausreichen, eine einzelne Laborprobe 1 während eines Erntevorgangs zu entnehmen und zu analysieren, um die NIR-Messdaten des gesamten Erntevorgangs zu verbessern.

Ganz grundsätzlich kann vorgesehen sein, dass die at-line Analysevorrichtung 26 Teil der landwirtschaftlichen Erntemaschine 3 ist, oder, dass die at-line Analysevorrichtung 26 extern zur landwirtschaftlichen Erntemaschine 3 angeordnet ist. Die at-line Analysevorrichtung 26 kann tragbar sein und/oder an einem Feld, das die landwirtschaftliche Erntemaschine 3 aberntet, in der Nähe des Feldes oder fern des Feldes in einem Labor 27 angeordnet sein.

Nach einer weiteren Lehre, der eigenständige Bedeutung zukommt, wird eine landwirtschaftliche Erntemaschine 3 eingerichtet zur Verwendung in einem vorschlagsgemäßen Verfahren vorgeschlagen. Auf alle Ausführungen zu dem vorschlagsgemäßen Verfahren darf verwiesen werden. Diese landwirtschaftliche Erntemaschine 3 kann insbesondere die genannten strukturellen Merkmale, vor allem die Probenentnahmevorrichtung 9, aufweisen und ausgestaltet sein, diese entsprechend zu verwenden.

Die vorschlagsgemäße landwirtschaftliche Erntemaschine 3 ist vorzugsweise mit einer NIR-Messvorrichtung 25 ausgestattet, wobei die NIR-Messvorrichtung 25 mit einem Kalibrationsdatensatz betrieben wird, der entsprechend wie oben beschrieben ermittelt wurde. Zusätzlich oder alternativ kann die landwirtschaftliche Erntemaschine 3 eine lokale Steuereinheit 29 aufweisen, die zur online Korrektur von NIR-Messdaten der NIR-Messvorrichtung 25 die NIR-Messdaten mit einem Korrekturwert, der wie oben beschrieben ermittelt wurde, verrechnet.

### Bezugszeichenliste

- 1: Laborprobe
- 2: Los Erntegut
- 3: Landwirtschaftliche Erntemaschine
- 4: Arbeitsaggregat
- 5: Feldbestand
- 6: Erntegut
- 7: Erntegutstrom
- 8: Ernteguttransportweg
- 9: Probenentnahmevorrichtung
- 10: Grob-Teilungsvorrichtung
- 11: Zerkleinerungsvorrichtung
- 12: Fein-Teilungsvorrichtung
- 13: Rohprobe
- 14: Rohprobenstrom
- 15: Laborprobenstrom
- 16: Restprobe
- 17: Auslass
- 18: Öffnung
- 19: Wand
- 20: Schneckenschraube
- 21: Bewegliche Klappe
- 22: Sammelvorrichtung
- 23: lokale Analysevorrichtung
- 24: Behältnis
- 25: NIR-Messvorrichtung
- 26: at-line Analysevorrichtung
- 27: Labor
- 28: Steuereinheit
- 29: lokale Steuereinheit
- 30: externe Steuereinheit
- 31: andere landwirtschaftliche Erntemaschinen
- B: Benutzer

## Patentansprüche

1. Verfahren zur Kombination von at-line Messdaten und on-line NIR-Messdaten zur Analyse von Erntegut (6),
wobei eine landwirtschaftliche Erntemaschine (3) mit mindestens einem Arbeitsaggregat (4) zum Aufnehmen eines abgeernteten Feldbestandes (5) als Erntegut (6) und/oder zur Verarbeitung des Ernteguts (6) vorgesehen ist, wobei das Erntegut (6) im Betrieb der landwirtschaftlichen Erntemaschine (3) in einem Erntegutstrom (7) entlang eines Ernteguttransportweges (8) durch die landwirtschaftlichen Erntemaschine (3) transportiert wird,
wobei die landwirtschaftliche Erntemaschine (3) eine an dem Ernteguttransportweg (8) angeordnete NIR-Messvorrichtung (25) zum Messen der NIR-Messdaten des Ernteguts (6) aufweist,
wobei die landwirtschaftliche Erntemaschine (3) eine an dem Ernteguttransportweg (8) angeordnete automatische Probenentnahmevorrichtung (9) zur Entnahme von Laborproben (1) aus dem Erntegutstrom (7) aufweist und mit der Probenentnahmevorrichtung (9) eine Laborprobe (1) entnimmt,
wobei eine at-line Analysevorrichtung (26) vorgesehen ist, wobei die Laborprobe (1) at-line durch Messen der at-line Messdaten mittels der at-line Analysevorrichtung (26) analysiert wird und wobei die at-line Messdaten und die on-line NIR-Messdaten in einer Verknüpfungsroutine zur Analyse der NIR-Messdaten miteinander verknüpft werden, wobei
die Laborprobe (1) aus einem Los Erntegut (2) mittels der landwirtschaftlichen Erntemaschine (3) gesammelt wird, und
wobei die Probenentnahmevorrichtung (9) eine am Ernteguttransportweg (8) angeordnete Grob-Teilungsvorrichtung (10) und eine Zerkleinerungsvorrichtung (11) und eine Fein-Teilungsvorrichtung (12) aufweist,
dass die Grob-Teilungsvorrichtung (10) aus dem Erntegutstrom (7) des Loses (2) eine Rohprobe (13) entnimmt, dass die Zerkleinerungsvorrichtung (11) die Rohprobe (13) zerkleinert und dass die Fein-Teilungsvorrichtung (12) aus der zerkleinerten Rohprobe (13) die Laborprobe (1) zur zeitlich entkoppelten Analyse entnimmt,
wobei die Fein-Teilungsvorrichtung (12) die Laborprobe (1) in diskreten, insbesondere äquidistanten, Zeitabschnitten aus der Rohprobe (13) entnimmt.

2. Verfahren nach Anspruch 1, **dadurch gekennzeichnet, dass** die NIR-Messvorrichtung (25) on-line NIR-Messdaten des Loses (2) sammelt, dass die NIR-Messdaten und die at-line Messdaten des Loses (2) in der Verknüpfungsroutine miteinander verknüpft werden, vorzugsweise, dass die NIR-Messvorrichtung (25) mehrere NIR-Messdaten eines Loses Erntegut (2) misst, weiter vorzugsweise, dass die NIR-Messdaten gemittelt und in der Verknüpfungsroutine mit den at-line Messdaten verknüpft werden.

3. Verfahren nach einem der vorhergehenden Ansprüche, **dadurch gekennzeichnet, dass** eine Steuereinheit (28) vorgesehen ist, dass die Steuereinheit (28) eine lokale Steuereinheit (29) aufweist, die Teil der landwirtschaftliche Erntemaschine (3) ist, und/oder dass die Steuereinheit (28) eine externe Steuereinheit (30) aufweist, die extern zu der landwirtschaftlichen Erntemaschine (3), insbesondere cloudbasiert, vorgesehen ist, vorzugsweise, dass die NIR-Messdaten von der lokalen Steuereinheit (29) an die externe Steuereinheit (30) gesendet werden, dass die at-line Messdaten von der at-line Analysevorrichtung (26) an die externe Steuereinheit (30) gesendet werden und dass die externe Steuereinheit (30) die Verknüpfungsroutine durchführt.

4. Verfahren nach einem der vorhergehenden Ansprüche, **dadurch gekennzeichnet, dass** in der Verknüpfungsroutine die at-line Messdaten und die NIR-Messdaten zu einem Kalibrationsdatensatz verknüpft werden, mit dem eine NIR-Messvorrichtung (25) zur Ermittlung von Inhaltsstoffen von Erntegut (6) betreibbar ist, vorzugsweise dass at-line Messdaten und NIR-Messdaten von mindestens 10, weiter vorzugsweise mindestens 50, noch weiter vorzugsweise mindestens 100 Losen (2) zu dem Kalibrationsdatensatz verknüpft werden.

5. Verfahren nach Anspruch 4, **dadurch gekennzeichnet, dass** mehrere landwirtschaftliche Erntemaschinen (3) vorgesehen sind und dass at-line Messdaten und NIR-Messdaten von mindestens 2, vorzugsweise mindestens 5, weiter vorzugsweis mindestens 20 landwirtschaftlichen Erntemaschinen (3) zu dem Kalibrationsdatensatz verknüpft werden.

6. Verfahren nach einem der vorhergehenden Ansprüche, **dadurch gekennzeichnet, dass** die NIR-Messvorrichtung (25) mit einem Kalibrationsdatensatz zur Ermittlung von Inhaltsstoffen von Erntegut (6) des Loses (2) betrieben wird, vorzugsweise, dass in der Verknüpfungsroutine die von der NIR-Messvorrichtung (25) ermittelten Inhaltsstoffe des Loses (2) mit den at-line Messdaten verglichen wird, weiter vorzugsweise, dass ein Korrekturwert ermittelt wird, mit dem die von der NIR-Messvorrichtung (25) ermittelten Inhaltsstoffe verrechnet werden können, um die Genauigkeit der Ermittlung der Inhaltsstoffe zu erhöhen.

7. Verfahren nach Anspruch 6, **dadurch gekennzeichnet, dass** der Korrekturwert abhängig von spezifischen Bedingungen, insbesondere dem Wetter und/oder einem Ort, insbesondere einem Feld, und/oder einer Fruchtart und/oder einer Jahreszeit, ermittelt wird, vorzugsweise, dass der Korrekturwert bei ähnlichen spezifischen Bedingungen auf der landwirtschaftlichen Erntemaschine (3) und/oder anderen landwirtschaftlichen Erntemaschinen (31) zur, insbesondere on-line, Korrektur von NIR-Messdaten verwendet wird.

8. Verfahren nach Anspruch 6 oder 7, **dadurch gekennzeichnet, dass** der Korrekturwert bei NIR-Messvorrichtungen (25) anderer landwirtschaftlicher Erntemaschinen (31) zur, insbesondere on-line, Korrektur von NIR-Messdaten verwendet wird, vorzugsweise, dass die anderen landwirtschaftlichen Erntemaschinen (31) in örtlicher Nähe zu der landwirtschaftlichen Erntemaschine (3) verwendet werden.

9. Verfahren nach einem der vorhergehenden Ansprüche, **dadurch gekennzeichnet, dass** die NIR-Messvorrichtung (25) NIR-Messdaten mehrerer Lose Erntegut (2), vorzugsweise eines Erntevorgangs, misst, dass die Probeentnahmevorrichtung eine Laborprobe (1) zu mindestens einem der Lose (2) entnimmt, die von der at-line Analysevorrichtung (26) analysiert wird, dass in der Verknüpfungsroutine aus den NIR-Messdaten und den at-line Messdaten mindestens eines der Lose (2) ein Korrekturwert ermittelt wird, dass die at-line Analysevorrichtung (26) zu mindestens einem der Lose (2) keine Laborprobe (1) analysiert, dass die NIR-Messdaten zu dem Los (2) ohne analysierte Laborprobe (1) mittels des Korrekturwerts korrigiert werden.

10. Verfahren nach einem der vorhergehenden Ansprüche, **dadurch gekennzeichnet, dass** die at-line Analysevorrichtung (26) Teil der landwirtschaftlichen Erntemaschine (3) ist, oder, dass die at-line Analysevorrichtung (26) extern zur landwirtschaftlichen Erntemaschine (3) angeordnet ist, vorzugsweise, dass die at-line Analysevorrichtung (26) tragbar ist und/oder an einem Feld, das die landwirtschaftlichen Erntemaschine (3) aberntet, in der Nähe des Feldes oder fern des Feldes in einem Labor (27) angeordnet ist.

11. Landwirtschaftliche Erntemaschine (3) eingerichtet zur Verwendung in einem Verfahren nach einem der vorhergehenden Ansprüche,
wobei die landwirtschaftliche Erntemaschine (3) mit mindestens einem Arbeitsaggregat (4) zum Aufnehmen eines abgeernteten Feldbestandes (5) als Erntegut (6) und/oder zur Verarbeitung des Ernteguts (6) vorgesehen ist, wobei das Erntegut (6) im Betrieb der landwirtschaftlichen Erntemaschine (3) in einem Erntegutstrom (7) entlang eines Ernteguttransportweges (8) durch die landwirtschaftlichen Erntemaschine (3) transportiert wird,
wobei die landwirtschaftliche Erntemaschine (3) eine NIR-Messvorrichtung (25) aufweist,
wobei die landwirtschaftliche Erntemaschine (3) eine an dem Ernteguttransportweg (8) angeordnete automatische Probenentnahmevorrichtung (9) zur Entnahme von Laborproben (1) aus dem Erntegutstrom (7) aufweist und dazu eingerichtet ist, mit der Probenentnahmevorrichtung (9) eine Laborprobe (1) zu entnehmen,
wobei die Probenentnahmevorrichtung (9) eine am Ernteguttransportweg (8) angeordnete Grob-Teilungsvorrichtung (10) und eine Zerkleinerungsvorrichtung (11) und eine Fein-Teilungsvorrichtung (12) aufweist,
wobei die Grob-Teilungsvorrichtung (10) dazu eingerichtet ist, aus dem Erntegutstrom (7) des Loses (2) eine Rohprobe (13) zu entnehmen,
wobei die Zerkleinerungsvorrichtung (11) dazu eingerichtet ist, die Rohprobe (13) zu zerkleinern und dass die Fein-Teilungsvorrichtung (12) dazu eingerichtet ist, aus der zerkleinerten Rohprobe (13) die Laborprobe (1) zur zeitlich entkoppelten Analyse zu entnehmen,
**dadurch gekennzeichnet, dass**
die Fein-Teilungsvorrichtung (12) dazu eingerichtet ist, die Laborprobe (1) in diskreten, insbesondere
äquidistanten, Zeitabschnitten aus der Rohprobe (13) zu entnehmen,
wobei die NIR-Messvorrichtung (25) dazu eingerichtet ist,
mit einem Kalibrationsdatensatz betrieben zu werden, der in einem Verfahren nach einem der Ansprüche 4 oder 5 ermittelt wurde und/oder wobei die landwirtschaftliche Erntemaschine (3) eine lokale Steuereinheit (29) aufweist, die zur on-line Korrektur von NIR-Messdaten der NIR-Messvorrichtung (25) dazu eingerichtet ist, die NIR-Messdaten mit einem Korrekturwert, der in einem Verfahren nach einem der Ansprüche 6 oder 7 ermittelt wurde, zu verrechnen.

## Claims

1. Method for combining at-line measurement data and on-line NIR measurement data to analyse a crop (6),
wherein there is provision for an agricultural harvesting machine (3) having at least one working unit (4) for picking up a harvested field stock (5) as the crop (6) and/or for processing the crop (6), the crop (6) being transported through the agricultural harvesting machine (3) in a crop stream (7) along a crop transport path (8) while the agricultural harvesting machine (3) is operating,
wherein the agricultural harvesting machine (3) has an NIR measuring device (25), which is arranged on the crop transport path (8), for measuring the NIR measurement data of the crop (6),
wherein the agricultural harvesting machine (3) has an automatic sampling device (9), which is arranged on the crop transport path (8), for taking laboratory samples (1) from the crop stream (7), and uses the sampling device (9) to take a laboratory sample (1),
there being provision for an at-line analysis device (26), the laboratory sample (1) being analysed at line by measuring the at-line measurement data by means of the at-line analysis device (26), and the at-line measurement data and the on-line NIR measurement data being interlinked in a linking routine to analyse the NIR measurement data, wherein
the laboratory sample (1) is collected from a lot of crop (2) by means of the agricultural harvesting machine (3), and
wherein the sampling device (9) has a coarse dividing device (10), which is arranged on the crop transport path (8), and a comminuting device (11) and a fine dividing device (12),
the coarse dividing device (10) taking a raw sample (13) from the crop stream (7) of the lot (2), the comminuting device (11) comminuting the raw sample (13) and the fine dividing device (12) taking the laboratory sample (1) from the comminuted raw sample (13) for temporally decoupled analysis,
the fine dividing device (12) taking the laboratory sample (1) from the raw sample (13) in discrete, in particular equidistant, time periods.

2. Method according to Claim 1, **characterized in that** the NIR measuring device (25) collects on-line NIR measurement data of the lot (2), **in that** the NIR measurement data and the at-line measurement data of the lot (2) are interlinked in the linking routine, preferably **in that** the NIR measuring device (25) measures multiple NIR measurement data of a lot of crop (2), more preferably **in that** the NIR measurement data are averaged and linked to the at-line measurement data in the linking routine.

3. Method according to either of the preceding claims, **characterized in that** there is provision for a control unit (28), **in that** the control unit (28) has a local control unit (29) which is part of the agricultural harvesting machine (3), and/or **in that** the control unit (28) has an external control unit (30) which is provided externally to the agricultural harvesting machine (3), in particular in a cloud-based manner, preferably in that the NIR measurement data are sent from the local control unit (29) to the external control unit (30), **in that** the at-line measurement data are sent from the at-line analysis device (26) to the external control unit (30), and **in that** the external control unit (30) performs the linking routine.

4. Method according to one of the preceding claims, **characterized in that** the linking routine links the at-line measurement data and the NIR measurement data to produce a calibration data set which can be used to operate an NIR measuring device (25) to determine constituents of the crop (6), preferably **in that** at-line measurement data and NIR measurement data from at least 10, more preferably at least 50, even more preferably at least 100, lots (2) are linked to produce the calibration data set.

5. Method according to Claim 4, **characterized in that** there is provision for multiple agricultural harvesting machines (3) and **in that** at-line measurement data and NIR measurement data from at least 2, preferably at least 5, more preferably at least 20, agricultural harvesting machines (3) are linked to produce the calibration data set.

6. Method according to one of the preceding claims, **characterized in that** the NIR measuring device (25) is operated using a calibration data set to determine constituents of the crop (6) of the lot (2), preferably **in that** the linking routine compares the constituents of the lot (2) that have been determined by the NIR measuring device (25) with the at-line measurement data, more preferably **in that** a correction value is determined, against which the constituents determined by the NIR measuring device (25) can be set in order to increase the accuracy of the determination of the constituents.

7. Method according to Claim 6, **characterized in that** the correction value is determined on the basis of specific conditions, in particular the weather and/or a location, in particular a field, and/or a crop type and/or a season, preferably **in that** the correction value is used for similar specific conditions on the agricultural harvesting machine (3) and/or other agricultural harvesting machines (31) for, in particular on-line, correction of NIR measurement data.

8. Method according to Claim 6 or 7, **characterized in that** the correction value is used for NIR measuring devices (25) of other agricultural harvesting machines (31) for, in particular on-line, correction of NIR measurement data, preferably **in that** the other agricultural harvesting machines (31) are used in local proximity to the agricultural harvesting machine (3).

9. Method according to one of the preceding claims, **characterized in that** the NIR measuring device (25) measures NIR measurement data of multiple lots of crop (2), preferably of a harvesting process, **in that** the sampling device takes a laboratory sample (1) for at least one of the lots (2), which laboratory sample is analysed by the at-line analysis device (26), **in that** the linking routine determines a correction value from the NIR measurement data and the at-line measurement data of at least one of the lots (2), **in that** the at-line analysis device (26) does not analyse a laboratory sample (1) for at least one of the lots (2), **in that** the NIR measurement data for the lot (2) without an analysed laboratory sample (1) are corrected by means of the correction value.

10. Method according to one of the preceding claims, **characterized in that** the at-line analysis device (26) is part of the agricultural harvesting machine (3), or **in that** the at-line analysis device (26) is arranged externally to the agricultural harvesting machine (3), preferably **in that** the at-line analysis device (26) is portable and/or is arranged on a field that the agricultural harvesting machine (3) harvests, near the field or away from the field in a laboratory (27).

11. Agricultural harvesting machine (3) designed for use in a method according to one of the preceding claims,
wherein there is provision for the agricultural harvesting machine (3) having at least one working unit (4) for picking up a harvested field stock (5) as the crop (6) and/or for processing the crop (6), the crop (6) being transported through the agricultural harvesting machine (3) in a crop stream (7) along a crop transport path (8) while the agricultural harvesting machine (3) is operating,
wherein the agricultural harvesting machine (3) has an NIR measuring device (25),
wherein the agricultural harvesting machine (3) has an automatic sampling device (9), which is arranged on the crop transport path (8), for taking laboratory samples (1) from the crop stream (7), and is designed to use the sampling device (9) to take a laboratory sample (1), wherein the sampling device (9) has a coarse dividing device (10), which is arranged on the crop transport path (8), and a comminuting device (11) and a fine dividing device (12),
the coarse dividing device (10) being designed to take a raw sample (13) from the crop stream (7) of the lot (2), the comminuting device (11) being designed to comminute the raw sample (13) and the fine dividing device (12) being designed to take the laboratory sample (1) from the comminuted raw sample (13) for temporally decoupled analysis, **characterized in that**
the fine dividing device (12) is designed to take the laboratory sample (1) from the raw sample (13) in discrete, in particular equidistant, time periods,
the NIR measuring device (25) being designed to be operated using a calibration data set determined in a method according to either of Claims 4 and 5 and/or the agricultural harvesting machine (3) having a local control unit (29) which, for on-line correction of NIR measurement data of the NIR measuring device (25), is designed to set the NIR measurement data against a correction value determined in a method according to either of Claims 6 and 7.

## Revendications

1. Procédé de combinaison de données de mesure at-line et de données de mesure NIR on-line, destiné à l'analyse de produits récoltés (6),
selon lequel il est prévu une machine de récolte agricole (3) dotée d'au moins un équipement de travail (4) destiné au ramassage de cultures de champ récoltées (5), en tant que récolte (6), et/ou au traitement de récoltes (6), la récolte (6) étant transportée, lors du fonctionnement de la machine de récolte agricole (3), dans un flux de récolte (7), le long d'un chemin de transport de récolte (8), à travers la machine de récolte agricole (3),
selon lequel la machine de récolte agricole (3) présente un dispositif de mesure NIR (25) qui est placé sur le chemin de transport de récolte (8) et est destiné à mesurer les données de mesure NIR de la récolte (6),
selon lequel la machine de récolte agricole (3) présente un dispositif de prélèvement d'échantillons (9) automatique, qui est placé sur le chemin de transport de récolte (8) et est destiné à prélever des échantillons de laboratoire (1) dans le flux de récolte (7), et prélève un échantillon de laboratoire (1) à l'aide du dispositif de prélèvement d'échantillons (9),
selon lequel il est prévu un dispositif d'analyse at-line (26), l'échantillon de laboratoire (1) étant analysé at-line, par mesure des données de mesure at-line au moyen du dispositif d'analyse at-line (26), et selon lequel les données de mesure at-line et les données de mesure NIR on-line sont combinées entre elles dans une routine de combinaison, en vue de l'analyse des données de mesure NIR, sachant que
l'échantillon de laboratoire (1) est prélevé dans un lot de récolte (2) au moyen de la machine de récolte agricole (3), et
sachant que le dispositif de prélèvement d'échantillons (9) présente un dispositif de division grossière (10), placé sur le chemin de transport de récolte (8), et un dispositif de broyage (11) ainsi qu'un dispositif de division fine (12),
que le dispositif de division grossière (10) prélève un échantillon brut (13) dans le flux de récolte (7) du lot (2), que le dispositif de broyage (11) broie l'échantillon brut (13), et que le dispositif de division fine (12) prélève dans l'échantillon brut (13) broyé, l'échantillon de laboratoire (1) aux fins d'analyse découplée dans le temps,
le dispositif de division fine (12) prélevant l'échantillon de laboratoire (1) à intervalles de temps discrets, notamment équidistants, dans l'échantillon brut (13).

2. Procédé selon la revendication 1, **caractérisé en ce que** le dispositif de mesure NIR (25) recueille des données de mesure NIR on-line du lot (2), **en ce que** les données de mesure NIR et les données de mesure at-line du lot (2) sont combinées entre elles dans la routine de combinaison, de préférence **en ce que** le dispositif de mesure NIR (25) mesure plusieurs données de mesure NIR d'un lot de récolte (2), en outre de préférence que l'on calcule la moyenne des données de mesure NIR et on les combine dans la routine de combinaison avec les données de mesure at-line.

3. Procédé selon une des revendications précédentes, **caractérisé en ce qu'**il est prévu une unité de commande (28), **en ce que** l'unité de commande (28) présente une unité de commande locale (29) faisant partie de la machine de récolte agricole (3), et/ou **en ce que** l'unité de commande (28) présente une unité de commande externe (30) qui est prévue de façon externe à la machine de récolte agricole (3), notamment sur la base du nuage, de préférence **en ce que** les données de mesure NIR sont transmises par l'unité de commande locale (29) à l'unité de commande externe (30), **en ce que** les données de mesure at-line sont transmises par le dispositif d'analyse at-line (26) à l'unité de commande externe (30), et **en ce que** l'unité de commande externe (30) exécute la routine de combinaison.

4. Procédé selon une des revendications précédentes, **caractérisé en ce que** dans la routine de combinaison, les données de mesure at-line et les données de mesure NIR sont combinées pour obtenir un ensemble de données d'étalonnage permettant de faire fonctionner un dispositif de mesure NIR (25) aux fins de déterminer des composants de produits récoltés (6), de préférence **en ce que** des données de mesure at-line et des données de mesure NIR d'au moins 10, notamment de préférence d'au moins 50, et de manière particulièrement avantageuse d'au moins 100 lots (2) sont combinées pour obtenir l'ensemble de données d'étalonnage.

5. Procédé selon la revendication 4, **caractérisé en ce que** plusieurs machines de récolte agricoles (3) sont prévues, et **en ce que** des données de mesure at-line et des données de mesure NIR d'au moins 2, de préférence d'au moins 5, et de manière particulièrement avantageuse d'au moins 20 machines de récolte agricoles (3) sont combinées pour obtenir l'ensemble de données d'étalonnage.

6. Procédé selon une des revendications précédentes, **caractérisé en ce que** le dispositif de mesure NIR (25) est exploité avec un ensemble de données d'étalonnage en vue de la détermination de composants de produits récoltés (6) du lot (2), de préférence **en ce que** dans la routine de combinaison, les composants du lot (2) déterminés par le dispositif de mesure NIR (25) sont comparés avec les données de mesure at-line, en outre de préférence **en ce que** l'on détermine une valeur de correction qui peut être appliquée aux composants déterminés par le dispositif de mesure NIR (25) pour augmenter la précision de la détermination des composants.

7. Procédé selon la revendication 6, **caractérisé en ce que** la valeur de correction est déterminée en fonction de conditions spécifiques, notamment du temps météorologique et/ou d'un lieu, notamment d'un champ, et/ou d'un type de céréale et/ou d'une saison, de préférence **en ce que** la valeur de correction est utilisée pour des conditions spécifiques similaires sur la machine de récolte agricole (3) et/ou sur d'autres machines de récolte agricoles (31), en vue de la correction, notamment on-line, de données de mesure NIR.

8. Procédé selon la revendication 6 ou 7, **caractérisé en ce que** la valeur de correction est utilisée pour des dispositifs de mesure NIR (25) d'autres machines de récolte agricoles (31), en vue de la correction, notamment on-line, de données de mesure NIR, de préférence **en ce que** les autres machines de récolte agricoles (31) sont utilisées à proximité géographique de la machine de récolte agricole (3).

9. Procédé selon une des revendications précédentes, **caractérisé en ce que** le dispositif de mesure NIR (25) mesure des données de mesure NIR de plusieurs lots de récolte (2), de préférence issus d'un processus de récolte, **en ce que** le dispositif de prélèvement d'échantillons prélève un échantillon de laboratoire (1) pour au moins un des lots (2), qui est analysé par le dispositif d'analyse at-line (26), **en ce que** dans la routine de combinaison, une valeur de correction est déterminée à partir des données de mesure NIR et des données de mesure at-line d'au moins un des lots (2), **en ce que** le dispositif d'analyse at-line (26) n'analyse pas d'échantillon de laboratoire (1) pour au moins un des lots (2), **en ce que** les données de mesure NIR pour le lot (2) sans échantillon de laboratoire (1) analysé sont corrigées au moyen de la valeur de correction.

10. Procédé selon une des revendications précédentes, **caractérisé en ce que** le dispositif d'analyse at-line (26) fait partie de la machine de récolte agricole (3), ou **en ce que** le dispositif d'analyse at-line (26) est installé à l'extérieur de la machine de récolte agricole (3), de préférence **en ce que** le dispositif d'analyse at-line (26) est portatif et/ou est installé sur un champ récolté par la machine de récolte agricole (3), à proximité du champ ou à distance du champ, dans un laboratoire (27).

11. Machine de récolte agricole (3) agencée en vue d'une utilisation dans un procédé selon une des revendications précédentes,
la machine de récolte agricole (3) étant dotée d'au moins un équipement de travail (4) destiné au ramassage de cultures de champ récoltées (5), en tant que récolte (6), et/ou au traitement de la récolte (6), la récolte (6) étant transportée, lors du fonctionnement de la machine de récolte agricole (3), dans un flux de récolte (7), le long d'un chemin de transport de récolte (8), à travers la machine de récolte agricole (3),
la machine de récolte agricole (3) présentant un dispositif de mesure NIR (25),
la machine de récolte agricole (3) présentant un dispositif de prélèvement d'échantillons (9) automatique, qui est placé sur le chemin de transport de récolte (8) et est destiné à prélever des échantillons de laboratoire (1) dans le flux de récolte (7), et étant conçue pour prélever un échantillon de laboratoire (1) à l'aide du dispositif de prélèvement d'échantillons (9),
le dispositif de prélèvement d'échantillons (9) présentant un dispositif de division grossière (10), placé sur le chemin de transport de récolte (8), et un dispositif de broyage (11) ainsi qu'un dispositif de division fine (12),
le dispositif de division grossière (10) étant conçu pour prélever un échantillon brut (13) dans le flux de récolte (7) du lot (2), le dispositif de broyage (11) étant conçu pour broyer l'échantillon brut (13), et que le dispositif de division fine (12) est conçu pour prélever l'échantillon de laboratoire (1) dans l'échantillon brut (13) broyé, aux fins d'analyse découplée dans le temps,
**caractérisée en ce que**
le dispositif de division fine (12) est conçu pour prélever l'échantillon de laboratoire (1) à intervalles de temps discrets, notamment équidistants, dans l'échantillon brut (13),
le dispositif de mesure NIR (25) étant conçu pour être exploité avec un ensemble de données d'étalonnage qui a été déterminé dans un procédé selon une des revendications 4 ou 5, et/ou la machine de récolte agricole (3) présentant une unité de commande locale (29) qui est conçue pour la correction on-line de données de mesure NIR du dispositif de mesure NIR (25), pour appliquer aux données de mesure NIR une valeur de correction qui a été déterminée dans un procédé selon une des revendications 6 ou 7.
